# EUROPEAN PATENT APPLICATION

(11) **EP 4 451 798 A1**
(43) Date of publication of application: **23.10.2024**
(21) Application number: 23169011.6
(22) Date of filing: 20.04.2023
(51) Int. Cl.: H05B 1/02

(54) **METHOD FOR CONTROLLING A HEATING DEVICE COMPRISING A PTC HEATING RESISTOR**

(71) Applicant: Borgwarner Inc., Auburn Hills, Michigan 48326 (US)
(72) Inventor: González Tabarés, Iago, 36315 Vigo (ES); Parada, Ignacio, 36315 Vigo (ES); Pérez, Sergio, 36315 Vigo (ES)
(74) Representative: Twelmeier Mommer & Partner

(57) **Abstract**

Disclosed is a method for controlling a heating device comprising a PTC heating resistor, wherein a pulse width modulated voltage is applied to the PTC heating resistor, said pulse width modulation having a first time period. According to the invention, the voltage is switched off for a second time period that is at least a hundred times larger than the first period, if a condition A or a condition B are fulfilled, wherein condition A requires that power is below a power threshold and a gradient of power is below a power gradient threshold, and wherein condition B requires that electrical resistance is above a resistance threshold for a third time period that is larger than the first time period, but smaller than the second time period.

## Description

The invention refers to a method for controlling a heating device comprising a PTC heating resistor, wherein a pulse width modulated voltage is supplied to the PTC heating resistor.

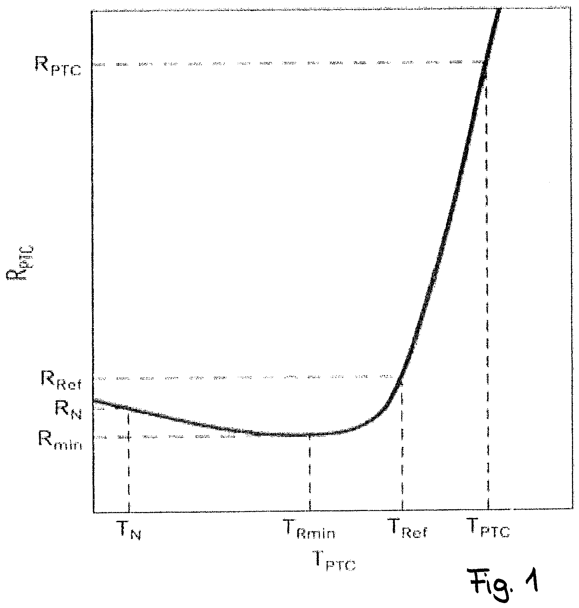

The temperature-resistance characteristic of PTC resistors, especially of ceramic PTC resistors, shows a marked increase of electrical resistance at elevated temperatures. At lower temperatures, resistance drops slowly with increasing temperature until a minimum is reached. Further increases in temperature cause at first a slow increase of resistance and as soon as a critical or reference temperature is reached, resistance increases very steeply with increased temperature. A typical temperature-resistance characteristic of a PTC resistor is shown schematically in fig. 1.

Due to the marked increase of resistance at higher temperatures PTC heating resistors offer an inherent protection from overheating and have been used extensively in heating devices, especially in vehicles. If the on-board power supply of a vehicle is only 12 V or 24 V, the intrinsic protection of PTC heating resistors is usually sufficient to prevent overheating. However, in High Voltage applications, e.g. from 200 to 900V, PTC resistors can reach temperatures higher than 200°C which may lead to damage of plastic components in the vicinity of the heating resistor. Hence, in high voltage applications like electric vehicles the inherent protection of PTC resistors from overheating is often insufficient.

It is therefore an object of the present invention to show how a heating device comprising a PTC resistor can be prevented from overheating in a high voltage application.

This object is solved by a method according to claim 1. Advantageous refinements of the invention are the matter of dependent claims.

In a method of the present invention, two different conditions are used to detect a dangerous increase of temperature. If either one of these conditions is fulfilled, heating power is turned off and heating thereby stopped. By using two different conditions for turning off heating power robust operation can be ensured over a wide range of operating states and overheating reliably prevented.

A first condition A requires that power is below a power threshold and a gradient of power is below a power gradient threshold. As the heating power of a PTC resistor depends on voltage and resistance a low heating power might be the result of an electrical resistance that is significantly above the resistor's minimum resistance and thereby the result of elevated temperatures. However, as the temperature-resistance characteristic of PTC resistors shows a minimum at temperature T_{Rmin}, an increased resistance does not necessarily indicate an increased temperature. It might as well be the result of a low temperature below T_{Rmin}. Condition A therefore also considers the gradient of power, i. e. the time derivate of power. At low temperatures, heating causes the temperature of the PTC resistor to rise until the minimum resistance is reached. Low power in combination with increasing power, i.e. a positive power gradient, therefore indicates low temperature. Only low power in combination with decreasing power, i.e. a negative power gradient, indicates an increased temperature.

In an embodiment of the invention, condition A may be always fulfilled if power is below a power threshold and a gradient of power is below a power gradient threshold. In another embodiment of the invention, condition A is only fulfilled if one or more additional requirements are met. For example, in a refinement of the invention condition A may also require duty cycle to be 100%. In this way, the risk of switching off heating in the absence of overheating can be reduced. This is because when there is an increased temperature and danger of overheating, heating control will compensate for increased electrical resistance by increasing duty cycle to meet a heating demand. Hence, as long as duty cycle is below 100%, there is very low risk of overheating.

If condition A also requires duty cycle to be 100%, a refinement of the invention may require a duty cycle of 100% for a predefined number of PWM periods or a predefined duration, e.g. for at least 0.1 s, for example 0.1 s to 2 s. In this way, the risk of switching off heating in the absence of overheating can be reduced even further.

In another refinement of the invention condition A may also require a stable or increasing voltage. In this way, the risk of switching off heating in the absence of overheating can be reduced. For example, voltage may be considered stable or increasing if the sum of a presently measured voltage value and a tolerance value, e.g. 5 to 15 V, is at least as large as a voltage value measured a defined time ago, e.g. in a duty cycle immediately preceding the present duty cycle or a defined number of duty cycles ago. For many applications, good results can be achieved if voltage values are considered that were measured 100 ms to 1 s apart.

In a refinement of the invention, condition A is fulfilled if
power is below a power threshold,
a gradient of power is below a power gradient threshold,
duty cycle is 100%, and
voltage is stable or increasing.

Condition A is easy to check, but can be unreliable. For increased protection from overheating, heating is therefore also stopped if a second condition B is fulfilled.

Condition B is requires that electrical resistance is above a resistance threshold for an extended time, which is also called "third time period" in this application. In an embodiment of the invention condition B may always be fulfilled if electrical resistance is above a resistance threshold for the third time period. In another embodiment of the invention condition B may only be fulfilled if one or more additional requirements are met.

The third time period is larger than the period of pulse width modulation used to provide the heating power, for example more than 10 times as large. In the present application, the period of pulse width modulation is also referred to as "first time period". The third time period mentioned above is shorter the time period for which voltage is switched off if either condition A or condition B are fulfilled. This time during which heating is switched off to prevent overheating is also referred to as "second time period" and at least 100 times larger than the first time period. The "second time period" may be defined as a function of measured parameters and/or the precise condition that caused heating to be switched off. The "second time period" may be chosen to be so large that the PTC heating resistor can cool down, e.g. be in range of 10 seconds to 5 minutes.

A single resistance measurement above a resistance threshold may be an erroneous measurement or caused by a temperature below T_{Rmin}. By checking whether resistance is above a resistance threshold for an extended time erroneous measurements do not cause an unnecessary stop of heating and it can also be verified that the resistance is indeed caused by an elevated temperature.

The easiest way to check whether electrical resistance is above a resistance threshold for a third time period is to simply measure resistance again after the third time period has passed. If both measurements are above the resistance threshold, condition B is fulfilled. In another embodiment, detection of a resistance above the resistance threshold triggers a series of several measurements within the third time period, e.g. 3 to 10 measurements. At the end of the third time period it is then checked whether an average of these measurements is above the resistance threshold. If that is the case, condition B is fulfilled. As each measurement has only a limited accuracy, an average over several measurements is more precise and more reliably indicates that the resistance is indeed above the resistance threshold for an elevated time.

By using two different conditions A and B for detecting a dangerous increase in temperature, very reliable protection from overheating can be achieved. Moreover, a dangerous increase can be quickly detected without the need for additional hardware or external sensors.

When heating is stopped because condition A or condition B have been fulfilled, a heating device should be given some time to cool down before it is turned on again. According to the present invention, voltage is switched off and thereby heating stopped for a time that is at least 100 times as large as the time period of the pulse width modulation of the heating voltage. In an embodiment of the invention, the heating voltage may be switched off for a time period that is at least a thousand times larger than the period of the pulse width modulation of the heating voltage, e.g. at least 10000 times as large or even more than 100000 times as large. How long the heating voltage is switched off may depend on measurements.

In an advantageous refinement of the invention the resistance threshold is set so low that a temperature-resistance characteristic of the PTC resistor is above the resistance threshold at temperatures below a first temperature and above a second temperature. Between the first and the second temperature is T_{Rmin}, the temperature where the resistance is minimal. If the resistance threshold is set so low, overheating can be prevented very reliably.

In an advantageous refinement of the invention, the resistance threshold is voltage dependent. In this way, condition B can be used to detect a dangerous increase of temperature even more reliably. Ceramic PTC resistors, especially PTC resistors on the basis of barium titanate, have a temperate-resistance characteristic that is voltage dependent. Typically, resistance gets lower the higher the voltage. A voltage resistant threshold therefore improves the precision of condition B and can avoid false positives.

In a further advantageous refinement of the invention, the power threshold of condition A may be voltage dependent. In this way, the reliability of condition A can be improved as a voltage dependence of the temperate-resistance characteristic can be taken into account.

In a further advantageous refinement of the invention, the power gradient threshold of condition A may be voltage dependent. In this way, the reliability of condition A can be improved as a voltage dependence of the temperate-resistance characteristic can be taken into account.

In a further advantageous refinement of the invention, the power threshold of condition A may be duty cycle dependent, especially proportional to duty cycle. For example, the power threshold may be defined for a duty cycle of 100%. If duty cycle is below 100%, a correspondingly smaller power threshold may be used, e.g. a power threshold that is only half as large if duty cycle is 50%. In this way false positives can be avoided and a dangerous temperature increase be detected more reliably.

In a further advantageous refinement of the invention, the power gradient threshold of condition A may be duty cycle dependent, especially proportional to duty cycle. For example, the power gradient threshold may be defined for a duty cycle of 100%. If duty cycle is below 100%, a correspondingly smaller power gradient threshold may be used, e.g. a power gradient threshold that is only half as large if duty cycle is 50%. In this way false positives can be avoided and a dangerous temperature increase be detected more reliably.

The described method works best with ceramic PTC resistors, especially PTC resistors on the basis of barium titanate, but may also be used with other PTC resistors.

In a further advantageous refinement of the invention, condition B is also fulfilled if electrical resistance is above the resistance threshold and a temperature sensor measures a temperature that is above a temperature threshold. In this way, overheating can be detected even more reliably. The temperature sensor may be arranged on a circuit board that carries a control circuit controlling heating power, e.g. as an NTC resistor. In this way, a temperature sensor can be provided at very low cost. Although a temperature arranged on a control circuit controlling heating power does not measure of the heating resistor, it can reliably distinguish cold conditions in which there is no danger of overheating and conditions of elevated temperature where overheating is a possibility and detected by an increase of resistance above a resistance threshold.

In a further advantageous refinement of the invention, heating power is reduced when heating is resumed after the voltage has been switched off for the second time period because condition A or a condition B have been fulfilled. Heating power is reduced for a fourth time period, which is at least a hundred times larger than the first time period. The fourth time period may be equal to the second time period, for example. Heating power may be reduced relative to heating power of normal operation to a maximum value, e.g. 90%. The maximum value may be set explicitly as a limit. Then any heating request resulting in a requested power below that limit, will not be affected. Another possibility is that any requested heating power calculated according to a heating demand, e.g. as a function of the difference between present temperature in a passenger cabin of a vehicle and a target temperature, is multiplied with a factor smaller than 1, e.g. a factor of 0.5 to 0.9.

## Claims

1. Method for controlling a heating device comprising a PTC heating resistor,
wherein a pulse width modulated voltage is applied to the PTC heating resistor, said pulse width modulation having a first time period,
**characterized in that** the voltage is switched off for a second time period that is at least a hundred times larger than the first time period, if a condition A or a condition B are fulfilled,
wherein condition A requires that
power is below a power threshold and a gradient of power below a power gradient threshold, and
wherein condition B requires that
electrical resistance is above a resistance threshold for a third time period that is larger than the first time period, but smaller than the second time period.

2. Method according to claim 1, **characterized in that** the resistance threshold is voltage dependent.

3. Method according to any one of the preceding claims, **characterized in that** condition A also requires duty cycle to be 100%.

4. Method according to claim 3, **characterized in that** condition A also requires duty cycle to be 100% for a predefined number of PWM periods.

5. Method according to any one of the preceding claims, **characterized in that** condition A also requires a stable or increasing voltage.

6. Method according to claim 5, **characterized in that** voltage is considered stable or increasing if the sum of a presently measured voltage value and a tolerance value is at least as large as a voltage value measured a defined time ago.

7. Method according to any one of the preceding claims, **characterized in that** the power threshold is voltage dependent.

8. Method according to any one of the preceding claims, **characterized in that** the power gradient threshold is voltage dependent.

9. Method according to any one of the preceding claims, **characterized in that** condition B is also fulfilled if electrical resistance is above the resistance threshold and a temperature sensor measures a temperature that is above a temperature threshold.

10. Method according to claim 9, **characterized in that** the temperature sensor is arranged on a circuit board that carries a control circuit controlling heating power.

11. Method according to claim 9 or 10, **characterized in that** the temperature sensor is an NTC sensor.

12. Method according to any one of the preceding claims, **characterized in that** the PTC resistor is a ceramic resistor.

13. Method according to any one of the preceding claims, **characterized in that** the resistance threshold is set so low that a temperature-resistance characteristic of the PTC resistor is above the resistance threshold at temperatures below a first temperature and above a second temperature.

14. Method according to any one of the preceding claims, **characterized in that** after the voltage has been switched off for the second time period because condition A or a condition B have been fulfilled, heating is resumed with a reduced heating power.
